Europäisches Patentamt

**European Patent Office**

Office européen des brevets

(11) Numéro de publication: **0 236 808**
**A1**

(12)

# DEMANDE DE BREVET EUROPEEN

(21) Numéro de dépôt: **87102330.5**

(22) Date de dépôt: **19.02.87**

(51) Int. Cl.³: **G 05 B 19/405**

(30) Priorité: **21.02.86 FR 8602407**

(43) Date de publication de la demande:
**16.09.87 Bulletin 87/38**

(84) Etats contractants désignés:
**AT BE CH DE ES FR GB GR IT LI LU NL SE**

(71) Demandeur: **ALSTHOM**
**38, avenue Kléber**
**F-75784 Paris Cédex 16(FR)**

(72) Inventeur: **Thibaut, Patrick**
**Les Dagants Cidex 174 Epersy**
**F-73410 Albens(FR)**

(72) Inventeur: **Bruneau, Philippe**
**180, avenue Paul Kruger**
**F-69100 Villeurbanne(FR)**

(72) Inventeur: **Celli, Francesco**
**2 Impasse Boileau Charvieux Chavagneux**
**F-38230 Pont de Cheruy(FR)**

(72) Inventeur: **Segura, Jean**
**2 rue Jules Védrines**
**F-69330 Meyzieu(FR)**

(72) Inventeur: **Elias, Jean-Claude**
**150, rue Anatole France**
**F-69100 Villeurbanne(FR)**

(72) Inventeur: **Saulnier, Joel**
**89bis, rue des Jardins**
**F-69100 Villeurbanne(FR)**

(72) Inventeur: **Couteret, Christian**
**15, rue Charles Richard**
**F-69003 Lyon(FR)**

(72) Inventeur: **Zacar, Alain**
**Chemin du Bois Comtal Millery**
**F-69390 Vernaison(FR)**

(74) Mandataire: **Weinmiller, Jürgen et al,**
**Lennéstrasse 9 Postfach 24**
**D-8133 Feldafing(DE)**

(54) **Dispositif d'assistance aux operations de montage d'un assemblage avec autocontrole.**

(57) Dispositif d'assistance aux opérations de montage d'un assemblage avec autocontrôle d'au moins une partie desdites opérations, caractérisé en ce qu'il comprend:
— un écran permettant la visualisation d'images représentatives des diverses étapes du montage,
— un oridateur (3) recevant un programme (4) de commande et de contrôle dudit montage,
— ledit ordinateur commandant le passage d'une image à l'autre lorsqu'une opération a été effectuée et contrôlée,
— ledit ordinateur étant relié à au moins une partie des outils (8) et à au moins une partie des appareils de mesure (9) utilisés au cours du montage, le programme vérifiant la bonne utilisation des outils et le bon résultat des mesures.

./...

EP 0 236 808 A1

## Dispositif d'assistance aux opérations de montage d'un assemblage avec autocontrôle

La présente invention est relative à un dispositif d'assistance aux opérations de montage d'un assemblage, avec autocontrôle d'au moins une partie des opérations.

Le dispositif s'applique en particulier au montage d'assemblage de matériel électrique.

Actuellement, le montage se fait en lisant des gammes sous forme de notes écrites difficiles à lire pour un monteur et difficiles à modifier par un agent des méthodes.

Il n'y a pas de contrôle du serrage des vis d'assemblage (contrôle de la quantité de vis à serrer et contrôle de la qualité du serrage).

De plus, le contrôle de résistance électrique de certains assemblages peut être amélioré.

Un but de la présente invention est de réaliser un dispositif permettant de :

- remplacer les gammes écrites,
- contrôler les vis d'assemblage et les compter,
- contrôler les résistances électriques de certains assemblages. Un autre but de la présente invention est de fournir le moyen de :

- former de nouveaux monteurs,
- former le Service Après Vente,
- initier certains licenciés.

Le brevet américain n° 4 514 176 décrit un appareil et une méthode d'éducation pour la vérification et la maintenance d'un appareil complexe. Ce brevet enseigne la manière de conduire des essais, mais ne montre pas comment on peut construire un appareil. Le brevet américain n° 4 139 901 décrit un système de stockage de documents sur films et des moyens pour retrouver ces documents. Ce brevet ne montre pas un système d'assistance au montage d'un appareil électrique incluant une série d'opérations d'assemblage mécanique et d'essais électriques.

L'invention a pour objet un dispositif d'assistance aux opérations de montage d'un assemblage avec autocontrôle d'au moins une partie desdites opérations, caractérisé en ce qu'il comprend

- 2 -

0236808

- un écran permettant la visualisation d'images représentatives des diverses étapes du montage,
- un ordinateur recevant un programme de commande et de contrôle dudit montage,
- ledit ordinateur commandant le passage d'une image à l'autre lorsqu'une opération a été effectuée et contrôlée,
- ledit ordinateur étant relié à au moins une partie des outils et à au moins une partie des appareils de mesure utilisés au cours du montage, le programme vérifiant la bonne utilisation des outils et le bon résultat des mesures.

L'invention est précisé par la description d'un mode de réalisation en référence au dessin annexé dans lequel :
La figure unique est un schéma d'ensemble du dispositif de l'invention selon une mode préféré de réalisation.

Le dispositif de l'invention comprend un dispositif de visualisation d'images illustrant les diverses phases du montage.

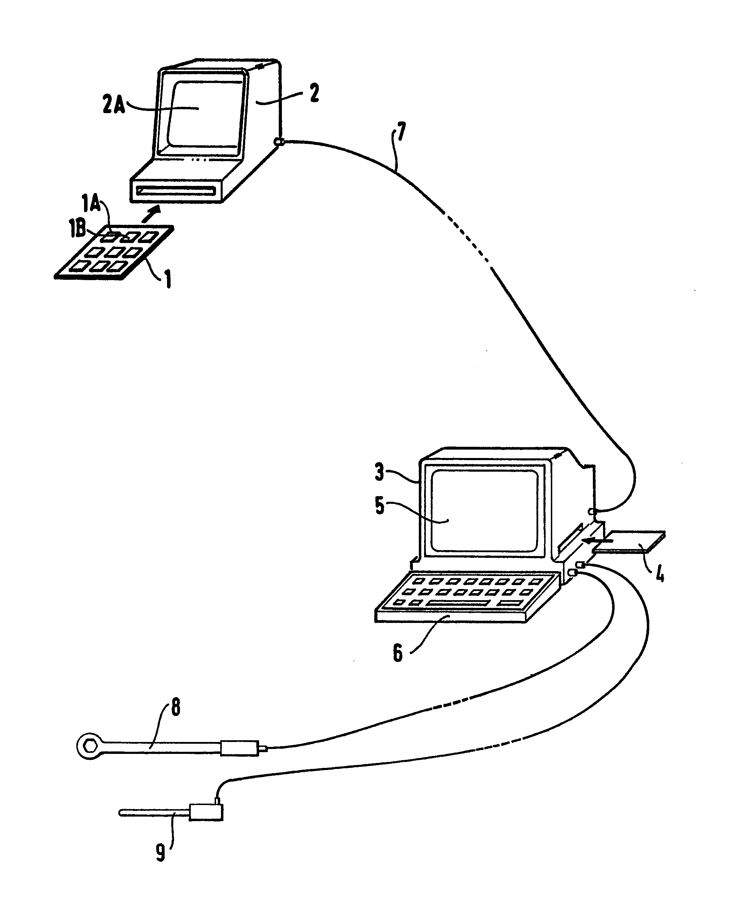

Dans l'exemple représenté, ce dispositif de visualisation comprend au moins une microfiche 1, dont les différentes figures 1A, 1B,......, illustrent les diverses phases du montage par des photographies des éléments à assembler et des consignes de montage.

La microfiche est visualisée au moyen d'un appareil lecteur 2, comprenant un écran 2A. Le lecteur peut être par exemple du type REGMA de Rhone-Poulenc système, muni d'une prise de liaison avec un ordinateur.

Le dispositif de l'invention comprend en outre un ordinateur 3 pouvant recevoir un programme 4 relatif au montage à affectuer.

L'ordinateur comporte un écran de contrôle 5, et un clavier 6. L'ordinateur peut, par exemple, être l'ordinateur QL de la société SINCLAIR comportant une mémoire vive de 128 KO.

Une liaison 7 relie l'ordinateur au lecteur.

L'ordinateur est relié également à divers outils ou instruments de mesure tel qu'une clé dynamométrique schématisée en 8 et un ohmmètre schématisé en 9.

La méthode de mise en oeuvre du dispositif est la suivante :
Pour chaque opération que le monteur va devoir faire, le lecteur de microfiches programmé 2 fait passer les photos de montage de l'appareil

- 3 -

**0236808**

dans l'ordre logique de déroulement des opérations.

Le monteur lit ces photos et exécute le travail. L'écran de contrôle 5 lié à l'ordinateur 3 permet de donner des informations complémentaires.

Le passage à la vue suivante est donné par l'ordinateur qui reçoit l'ordre soit du monteur lui-même soit automatiquement pour certaines opérations : serrage à la clé dynamométrique, (lorsque le nombre de vis à visser, chacune au couple convenable, a été atteint, un signal envoyé à l'ordinateur permet de passer à la vue suivante), mesure de la résistance électrique d'un assemblage (lorsque la mesure est dans la fourchette de valeurs définie par le Service Technique, un signal permet de passer à la vue suivante).

La clé dynamométrique utilisée pour le serrage est une clé dynamométrique existante sur le marché sur laquelle on rajoute un contact qui se ferme lorsque la clé touche la vis à serrer et un autre qui se ferme lorsque l'on atteint le couple de serrage préconisé. Ces contacts sont reliés à l'ordinateur.

Un exemple d'utilisation du procédé est donné ci-après, en référence au montage d'un ensemble fixe de contact d'un sectionneur, comprenant l'assemblage d'un cône, d'une demi-sphère, d'un support de contact fixe, d'un joint et d'un contact-fixe, puis le montage soit d'une rotule soit d'une tulipe de mise à la terre.

Les opérations à faire sont les suivantes :

1 - Mise en marche des appareils par un interrupteur commun.

2 - Introduction du programme dans l'ordinateur.

3 - Introduction de la microfiche dans le lecteur.

4 - Frapper le code écrit sur la microfiche. S'il y a concordance entre les codes le programme démarre. S'il y a discordance un code anomalie apparaît sur l'écran ainsi que les indications nécessaires à la connection (code erroné - erreur de programme...)

5 - L'écran de contrôle indique au monteur la manière de procéder pour cadrer parfaitement la photo index sur l'écran du lecteur.

6 - Lorsque cette opération est terminée le monteur tape sur la barre d'espacement.

7 - La première photo apprait sur l'écran du lecteur. Elle montre

- 4 -

0236808

l'ensemble des pièces communes qui seront nécessaires au montage.

En même temps sur l'écran de contrôle apparaît le texte suivant :

NUMERO DU SOUS ENSEMBLE :..................

VERIFIER LA QUALITE ET LA QUANTITE DES PIECES.

Cette opération étant terminée, le monteur tape sur la barre d'espacement.

8 - La deuxième photo apparaît sur l'écran, elle montre l'outillage nécessaire au montage de cette partie commune. Sur l'écran de coNtrôle apparaît le texte :

SE SERVIR DE L'OUTILLAGE N..................

Le monteur se procure l'outil puis tape sur la barre d'espacement.

9 - La troisième photo apparaît ; elle montre les surfaces de contact qui demandent une opération d'avivage. Sur l'écran de contrôle apparaît le texte :

VOIR INSTRUCTION OPERATIONNELLE N.........

CETTE INSTRUCTION EST COMMENTEE PAR MICROFICHES.

Le monteur peut demander de l'aide et lire l'instruction opérationnelle si il le désire. Cette opération terminée le monteur tape sur la barre d'espacement.

10 - La photo 4 demande la mise en place du joint et la préparation de la visserie tout en stipulant par un symbole l'interdiction de graisse.

Il n'y a pas de texte sur l'écran de contrôle. Le monteur frappe sur la barre d'espacement.

11 - La photo 5 guide le monteur sur l'orientation des pièces avant assemblage. Il n'y a pas de texte sur l'écran de contrôle. Après assemblage sans serrage le monteur passe à la vue suivante.

12 - La photo 6 donne le couple de serrage des vis du contact fixe sur le cône et sur l'écran de contrôle apparaît l'indication :

4 VIS A SERRER AU COUPLE DE 2,5 DaN m

Le monteur à l'aide de la clef dynamométrique, applique sur la première vis le couple indiqué. Lorsque ce couple est atteint un son est émis par l'ordinateur et sur l'écran de contrôle apparaît l'indication :

3 VIS A SERRER AU COUPLE DE 2,5 DaN m

L'opération est la même que précédemment. La photo n'a pas changé. Lorsque le couple est atteint il y a un son et sur l'écran de contrôle apparaît l'indication :

2 VIS A SERRER AU COUPLE DE 2,5 DaN m

L'opération est recommencée 2 fois ; l'écran de contrôle indique alors OPERATION DE SERRAGE AU COUPLE TERMINEE.

L'ordinateur donne l'ordre de passage à la vue suivante.

13 - La photo 7 apparaît. En même temps sur l'écran de contrôle on peut lire l'indication :

BLOCAGE DES VIS EFFECTUE A L'ENCUVAGE DU CONTACT FIXE.

Le monteur prépare la visserie et monte sans bloquer. Après cette opération il frappe sur la barre d'espacement. L'écran de contrôle affiche alors :

2 OPTIONS :   1 - ROTULE

                        2 - TULIPE DE MISE A LA TERRE

FRAPPER 1 OU 2

Le monteur ayant frappé par exemple sur 2 la photo 8 et la photo 9 relatives à la rotule sont sautées. La photo 10 apparaît. Elle montre la tulipe de mise à la terre et la visserie nécessaires à sa fixation.

Le monteur frappe sur la barre d'espacement. La photo 11 apparaît. Elle montre l'outillage nécessaire au montage du contact de mise à la terre. Le monteur prépare cet outillage et frappe sur la barre d'espacement.

La photo 12 apparaît. L'écran de contrôle indique :

4 VIS A SERRER AU COUPLE DE 2,5 DaN m.

Le processus est le même que pour le paragraphe 12. L'écran de contrôle indique alors :

OPERATION DE SERRAGE AU COUPLE TERMINE.

L'ordinateur fait passer la vue suivante.

14 - Mesure de la résistance du contact. L'écran de contrôle indique :

MESURER LA RESISTANCE A L'AIDE DE L'OUTIL.........

Si la valeur de la résistance est supérieure à une valeur maximale autorisée, l'écran indique :

VALEUR DE RESISTANCE ELEVEE CONSULTER LA MAITRISE.

Si la valeur est inférieure, l'écran indique :.

SEQUENCE DE MONTAGE DU CONTACT FIXE TERMINEE.

Le dispositif de l'invention tient compte des arrêts éventuels du monteur ; si le monteur est absent, le dispositif permet la reprise immédiate par un autre monteur exactement à l'opération en attente réduisant ainsi les erreurs de reprise d'un travail.

Le dispositif peut comporter des phases plus détaillées, deux allures de marche, une pour nouveau monteur l'autre pour monteur exercé. Si le programme est choisi en phases détaillées le nombre de photos et d'indications seront plus importantes.

Le dispositif est évolutif. La maîtrise peut donner des indications nouvelles grâce au progiciel simple. Une modification de photo ou de texte est faite rapidement à l'inverse de certains systèmes vidéo utilisés dans d'autres usines.

Tout autre appareil ou outil de contrôle ou de mesure peut être utilisé, par exemple un outil de contrôle de l'étanchéité ou plus généralement tout outil de contrôle utilisé dans un atelier de montage.

Pour les séquences de vissage, lorsque le couple est atteint, une marque sur la vis apparaît soit par l'intermédiaire d'un arc électrique, soit par l'intermédiaire d'une marque de peinture.

Le dispositif peut servir pour la formation des licenciés et pour les services sur chantiers.

Le monteur peut revenir en arrière si il a un doute sur le choix de l'option (paragraphe 13).

Enfin, on peut noter que les microfiches et le lecteur de microfiche peuvent être supprimés, et remplacés par des diapositives avec lecteur adapté à l'ordinateur ou encore remplacés par des photos vidéo, le programme de l'ordinateur étant élaboré pour projeter sur l'écran les images représentatives du montage.

REVENDICATIONS

1/ Dispositif d'assistance aux opérations de montage d'un assemblage avec autocontrôle d'au moins une partie desdites opérations, caractérisé en ce qu'il comprend

- un écran permettant la visualisation d'images représentatives des diverses étapes du montage,

- un ordinateur (3) recevant un programme (4) de commande et de contrôle dudit montage,

- ledit ordinateur commandant le passage d'une image à l'autre lorsqu'une opération a été effectuée et contrôlée,

- ledit ordinateur étant relié à au moins une partie des outils (8) et à au moins une partie des appareils de mesure (9) utilisés au cours du montage, le programme vérifiant la bonne utilisation des outils et le bon résultat des mesures.

2/ Dispositif selon la revendication 1, caractérisé en ce que lesdites images (1A, 1B) sont réunies sur microfiches (1), ledit écran (2A) étant celui d'un lecteur (2) de microfiches.

3/ Dispositif selon la revendication 1, caractérisé en ce que les images sont réalisées dans ledit programme, ledit écran (5) étant celui dudit ordinateur (3) ou appartenant à un périphérique dudit ordinateur.

4/ Dispositif selon l'une des revendications 1 à 3, caractérisé en ce que l'outil est une clé dynamométrique (8) munie de contacts électriques reliés à l'ordinateur pour la détection du contact entre la clé et la pièce à serrer et pour la détection de l'obtention de la valeur de consigne de serrage.

5/ Dispositif selon l'une des revendications 1 à 4, caractérisé en ce que l'appareil de mesure (9) est un ohmmètre.

6/ Dispositif selon l'une des revendications 1 à 3 caractérisé en ce que l'appareil de mesure peut être :

- un outil de contrôle de l'étanchéité,

- tout dispositif de contrôle utilisé dans un atelier de montage.

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl 4) |
|---|---|---|---|
| Y,A | US-A-4 514 176  (BOYER et al.)<br>* En entier * | 1-6 | G 05 B  19/405 |
| Y,A | US-A-4 139 901  (GANSKE)<br>* En entier * | 1,3 | |
| Y,A | EP-A-0 007 660  (NEWS LOG)<br>* En entier * | 2,3 | |
| A | EP-A-0 041 436  (PARISOT)<br>* En entier * | 1-6 | |
| A | EP-A-0 063 080  (PIATON)<br>* En entier * | 1-6 | |

-----

|  |
|---|
| DOMAINES TECHNIQUES RECHERCHES (Int. Cl.4) |
| G 05 B  19<br>G 09 B  19 |

Le présent rapport de recherche a été établi pour toutes les revendications

| Lieu de la recherche | Date d'achèvement de la recherche | Examinateur |
|---|---|---|
| LA HAYE | 26-05-1987 | RESSENAAR J.P. |